# EUROPEAN PATENT APPLICATION

(11) **EP 4 757 426 A1**
(43) Date of publication of application: **10.06.2026**
(21) Application number: 24852169.2
(22) Date of filing: 30.07.2024
(51) Int. Cl.: H04W 48/18, H04L 41/0894, H04L 41/40

(54) **METHOD AND APPARATUS FOR MANAGING NETWORK SLICE**

(30) Priority: 04.08.2023 KR 20230102079
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); LEE, Hoyeon, Suwon-si Gyeonggi-do 16677 (KR)
(74) Representative: Gulde & Partner
(86) International application number: PCT/KR2024/011116
(87) International publication number: WO 2025/033813

(57) **Abstract**

The present disclosure relates to a 5G or 6G communication system for supporting a higher data transmission rate. Provided is a method for managing a network slice by means of a session management function plus a packet data network gateway control plane function (SMF+PGW-C). The method may comprise receiving a request message for a packet data network (PDN) connection related to a user equipment (UE) from a mobility management entity (MME); determining single-network slice selection assistance information (S-NSSAI) for the PDN connection; in case that the request message for the PDN connection includes information indicating that the UE supports network slice replacement, transmitting a subscription request for network slice availability information to a policy control function (PCF); and transmitting a message including the determined S-NSSAI for the PDN connection to the MME.

## Description

### [Technical Field]

The disclosure relates to a method and device for managing a network slice in a wireless communication system. More specifically, the disclosure relates to a method and device for replacing a network slice.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In mobile communication systems, network slice technology enables the provision of various virtual networks that may provide specialized services. Meanwhile, when a network slice becomes unavailable, it is important to provide service continuity by moving UEs or sessions using the network slice to another slice. The disclosure proposes a network slice replacement method through a network function interoperable with a 5G system in a 4G system to which network slice technology is applicable.

### [Detailed Description of the Invention]

### [Technical Problem]

The 5G mobile communication network includes a 5G user equipment (UE), a 5G radio access network (RAN), and a 5G core network. The 5G core network includes network functions (NFs), such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and unified data repository (UDR) that stores such various network functions.

In the 5G system, network slicing is a technique and structure that enables several virtualized, independent, logical networks in one physical network. The network operator configures a virtual end-to-end network called a network slice and provides service to meet specified requirements for the service/application. The network slice is identified by an identifier called single-network slice selection assistance information (S-NSSAI), and the network operator provides the network slice(s) to the UE to receive a service.

Specifically, in the 5G system, when the UE registers in the network, the UE transmits identifier information (i.e., requested S-NSSAIs) about the network slices to be requested to the AMF, and the AMF provides information (allowed NSSAI) about the network slices usable by the UE to the UE considering the requested S-NSSAIs and subscriber information. Even if information on slices requested by a UE is not provided, the AMF may provide Allowed NSSAI to the UE, and in this case, the Allowed NSSAI may include information on default configured slices (Default Configured NSSAI) and information on slices set as default among subscription slices included in UE subscriber information (i.e., Default Subscribed S-NSSAIs).

When no slice may be included in the Allowed NSSAI (e.g., when Default Configured NSSAI and Default Subscribed S-NSSAIs are not present or are unavailable), the AMF transmits a network registration rejection message including a cause code indicating registration rejection due to no available slice to the UE.

Meanwhile, when an S-NSSAI (i.e., a network slice) becomes unavailable, it is important to provide service continuity by moving UEs or sessions using the network slice to another slice. The disclosure proposes a network slice replacement method through a network function interoperable with a 5G system in a 4G system to which network slice technology is applicable.

### [Technical Solution]

The disclosure proposes a network slice replacement method through a network function or network entity (specifically, SMF+PGW-C) interoperable with a 5G system in a 4G system to which network slice technology is applicable.

According to an embodiment, a method for managing a network slice by a network entity is provided. The method may include receiving a request message for a packet data network (PDN) connection related to a user equipment (UE) from a mobility management entity (MME), determining single-network slice selection assistance information (S-NSSAI) for the PDN connection, in case that the request message for the PDN connection includes information indicating that the UE supports network slice replacement, transmitting a subscription request for network slice availability information to a policy control function (PCF), and transmitting a message including the determined S-NSSAI for the PDN connection to the MME.

According to an embodiment, a device for a network entity for managing a network slice may be provided. The device may include a transceiver and a controller connected to the transceiver. The controller may be configured to receive a request message for a packet data network (PDN) connection related to a user equipment (UE) from a mobility management entity (MME), determine single-network slice selection assistance information (S-NSSAI) for the PDN connection, in case that the request message for the PDN connection includes information indicating that the UE supports network slice replacement, transmit a subscription request for network slice availability information to a policy control function (PCF), and transmit a message including the determined S-NSSAI for the PDN connection to the MME.

### [Advantageous Effects]

Embodiments of the disclosure may provide a novel process capable of replacing a network slice in relation to availability of the network slice.

### [Brief Description of Drawings]

FIG. 1 illustrates an architecture of an exemplary 5G system.
FIG. 2 illustrates a flowchart of a process for managing a network slice according to an embodiment of the disclosure.
FIG. 3 illustrates a flowchart of a process for managing a network slice according to an embodiment of the disclosure.
FIG. 4 illustrates a flowchart of a process for managing a network slice according to an embodiment of the disclosure.
FIG. 5 illustrates a block diagram illustrating a device for an entity according to embodiments of the disclosure.

### [Mode for Carrying out the Invention]

Hereinafter, the operational principle of the disclosure is described below with reference to the accompanying drawings. In the following description of the disclosure, detailed descriptions of known functions or configurations are omitted when they may unnecessarily obscure the subject matter of the disclosure. The terms as used herein are defined considering the functions in the present disclosure and may be replaced with other terms according to the intention or practice of the user or operator. Therefore, the terms should be defined based on the overall disclosure.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited by the terms, and such terms may be replaced with other terms denoting objects with equivalent technical concept.

For ease of description, the terms and names defined in the latest 3rd generation partnership project 5G and NR standards among the current communication standards are used herein. However, the disclosure is not limited by such terms and names and may be likewise applicable to wireless communication networks conforming to other standards. The present invention may be applied to 3GPP GS/NR (5th generation mobile communication standards).

A 5G mobile communication network includes a 5G user equipment (UE, terminal), a 5G radio access network (RAN, a base station, a 5g nodeB (gNB), an evolved nodeB (eNB)), and a 5G core network. The 5G core network includes network functions, such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and unified data repository (UDR) that stores such various network functions.

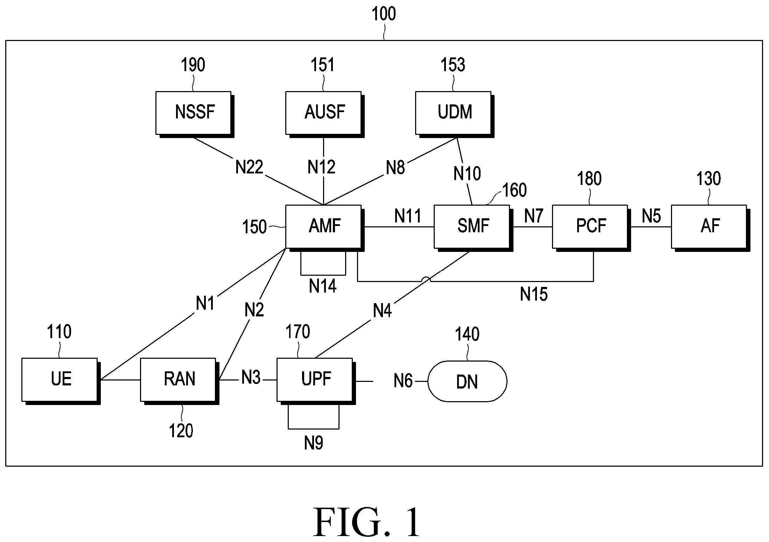

In the 3GPP system, a conceptual link connecting NFs in the 5G system is defined as a reference point. Example reference points included in the 5G system architecture represented in FIG. 1 are provided as follows.
N1: the reference point between the UE and the AMF
N2: Reference point between (R)AN and AMF
N3: Reference point between (R)AN and UPF
N4: Reference point between SMF and UPF
N5: Reference point between PCF and AF
N6: Reference point between UPF and DN
N7: Reference point between SMF and PCF
N8: the reference point between the UDM and the AMF
N9: Reference point between two core UPFs
N10: Reference point between UDM and SMF
N11: Reference point between AMF and SMF
N12: Reference point between AMF and AUSF
N13: the reference point between UDM and authentication server function (AUSF)
N14: the reference point between two AMFs
N15: the reference point between PCF and AMF in non-roaming scenario and reference point between PCF in visited network and AMF in roaming scenario

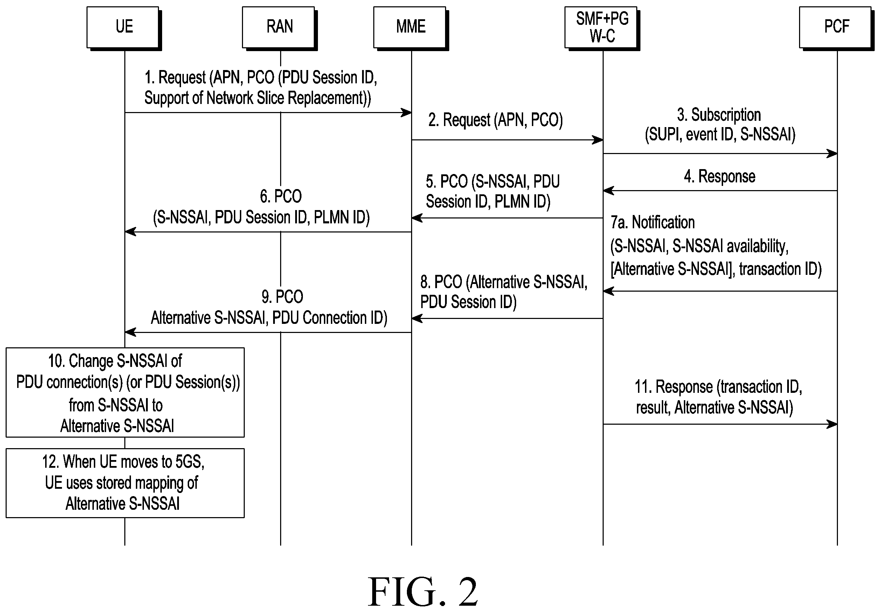

FIG. 2 illustrates a flowchart of a process for managing a network slice according to an embodiment of the disclosure. More specifically, FIG. 2 illustrates a method for notifying on a per-UE basis using a slice in an evolved packet system (EPS) when an unavailable network slice occurs, and a network slice replacement method.

Step 1. The UE may transmit a PDN connection establishment request to a mobility management entity (MME) through the RAN.

The message may include an access point name (APN) associated with the UE, a protocol data unit (PDU) Session ID, and Support of Network Slice Replacement (i.e., whether the UE supports network slice replacement). The PDU session ID and Support of network slice replacement information may be included in a protocol configuration option (PCO) and delivered to the SMF+PGW-C (session management function plus packet data network gateway control plane function). The SMF+PGW-C may be simply referred to as an arbitrary network entity or an arbitrary NF.

Step 2. When the MME receives the request of step 1 from the UE, the MME transmits a request message for a PDN connection to the SMF+PGW-C.

The message may include one or more of a PDU session ID (PDU Session ID), an APN, and a UE ID. The message may include the PCO received from the UE.

Step 3. The SMF+PGW-C determines an S-NSSAI (i.e., slice identifier information) for a PDN Connection based on an APN for the PDN connection (PDN Connection), S-NSSAI information supported by the SMF_PGW-C, subscription S-NSSAI information for the UE, or the like. The SMF+PGW-C may transmit a subscription request for network slice availability information (e.g., slice availability) to the PCF. The SMF+PGW-C may transmit the subscription request for slice availability information only when an indication of Support of Network Slice Replacement is included in the PCO of the message received in step 2 (i.e., when the UE supports Network Slice Replacement).

The subscription request may include one or more of an event ID indicating slice availability, a subscription S-NSSAI for the UE, a UE ID, a PDU Session ID, and a notification address.

When the PCF receives the subscription request, the PCF creates a subscription based on the information included in the request.

Meanwhile, even when the PCF receives another message from the SMF_PGW-C rather than a separate subscription request, the PCF may regard the message as an implicit subscription request for a slice availability event for one or more S-NSSAIs and create a subscription for the slice availability event for one or more S-NSSAIs for the SMF+PGW-C.

Step 4. The PCF transmits a response message to the SMF+PGW-C.

Step 5. The SMF+PGW-C may include an S-NSSAI and PLMN information for a PDN connection (PDN Connection) in a PCO and transmit the PCO to the MME.

Step 6. When a PCO is included in the message received from the SMF+PGW-C, the MME includes the PCO in a message transmitted to the UE through the RAN. The message transmitted by the MME to the UE may include information indicating that a PDN Connection has been established.

When a PCO is included in the message received through the RAN and the S-NSSAI and PLMN ID are included in the PCO, the UE stores the S-NSSAI and the PLMN ID as the S-NSSAI and PLMN ID values corresponding to the PDU Session ID.

Step 7a. When an S-NSSAI is unavailable and, when there is present an SMF+PGW-C that has requested subscription for a slice availability event of the S-NSSAI or an SMF+PGW-C serving a UE using the unavailable S-NSSAI (i.e., when the PCF knows the SMF+PGW-C), the PCF may transmit a notification message to the SMF+PGW-C. The message includes the following information:
- S-NSSAI: Indicates an unavailable S-NSSAI (or an S-NSSAI requiring replacement). When S-NSSAI availability is present, when the S-NSSAI availability indicates availability, it may indicate an available S-NSSAI.
- S-NSSAI availability: Information indicating whether a slice is usable may be included. It may indicate unavailability or availability (i.e., an S-NSSAI that was unavailable has become available).
- Alternative S-NSSAI: Indicates S-NSSAI information to which an unavailable S-NSSAI should be replaced.
- Transaction ID (or PDU session ID): A Transaction ID (or PDU session ID or UE ID) corresponding to a PDU session having a subscription for slice availability change may be included.

When an Alternative S-NSSAI is not present in the message received in step 7a, the SMF+PGW-C may determine another S-NSSAI other than the unavailable S-NSSAI received in step 7a among network slices supported by the SMF+PGW-C as the Alternative S-NSSAI.

Step 8. When an unavailable S-NSSAI (or an S-NSSAI requiring replacement) is included in the message received in step 7a, the SMF+PGW-C may perform S-NSSAI replacement for a PDN Connection corresponding to the Transaction ID (or UE ID or PDU Session ID) of the message received in step 7a.

When the message from the PCF includes an unavailable S-NSSAI (or an S-NSSAI requiring replacement) and an Alternative S-NSSAI, the Alternative S-NSSAI included in the message from the PCF may be used as an S-NSSAI replacing the unavailable S-NSSAI (or the S-NSSAI requiring replacement).

When the message from the PCF includes an unavailable S-NSSAI (or an S-NSSAI requiring replacement) but does not include an Alternative S-NSSAI, the SMF+PGW-C may determine an S-NSSAI (i.e., Alternative S-NSSAI) replacing the unavailable S-NSSAI (or the S-NSSAI requiring replacement) based on configuration information and subscription slice information for the UE, or the like.

The SMF+PGW-C transmits a message including a PCO (a message format transmitted to the UE) to the MME serving the PDN Connection (or UE) corresponding to the Transaction ID (or UE ID or PDU Session ID), and may include an Alternative S-NSSAI, a PDU Session ID, and Mapping of Alternative S-NSSAI in the PCO.

The Mapping of Alternative S-NSSAI indicates mapping information between the existing S-NSSAI and the Alternative S-NSSAI (i.e., information indicating that the Alternative S-NSSAI is used instead of the existing S-NSSAI).

Step 9. When a PCO is present in the message received from the SMF+PGW-C, the MME transmits the PCO to the UE through the RAN.

Step 10. When a PCO is included in the message received through the RAN and the Alternative S-NSSAI and PDU Session ID are included in the PCO, the UE changes the S-NSSAI corresponding to the PDU Session ID to the S-NSSAI value included in the Alternative S-NSSAI.

Step 11. The SMF+PGW-C may transmit a message indicating a result of network slice replacement to the PCF. The message may include a Transaction ID (or PDU Session ID), a network slice replacement execution result (e.g., success when processing is possible, failure when processing is not possible), and an Alternative S-NSSAI (may be included if the SMF+PGW-C has determined the Alternative S-NSSAI).

When network slice replacement is not possible for the PDN Connection (e.g., when the SMF+PGW-C has identified that the maximum number of sessions has been reached for the Alternative S-NSSAI determined by the PCF), the SMF+PGW-C may transmit a network slice replacement execution result indicating failure and cause information (e.g., maximum number of sessions reached).

Step 12. When the UE has moved to a 5th generation system (5GS), and the message received in step 9 includes Mapping of Alternative S-NSSAI and the information indicates that an Alternative S-NSSAI is to be used instead of an S-NSSAI, the UE may include the Alternative S-NSSAI instead of the S-NSSAI in a PDU session establishment request message transmitted to the AMF.

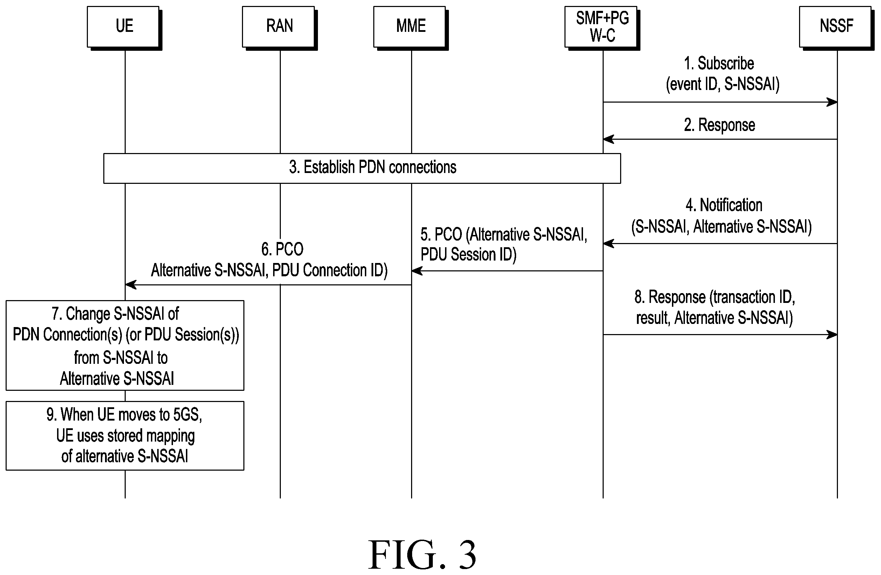

FIG. 3 illustrates a flowchart of a process for managing a network slice according to an embodiment of the disclosure. More specifically, FIG. 3 illustrates a method for notifying when an unavailable network slice has become available, and a network slice replacement method.

Step 1. When the SMF+PGW-C supports Network Slice Replacement and is configured to perform Network Slice Replacement using a network slice selection function (NSSF), the SMF+PGW-C may transmit a subscription request for slice availability to the NSSF.

The subscription request may include one or more of an event ID indicating slice availability, S-NSSAI(s), and a notification address.

In this case, the S-NSSAI(s) may be constituted of some or all of the S-NSSAIs supported by the SMF+PGW-C.

Step 2. When the NSSF receives the subscription request, the NSSF creates a subscription based on the information included in the request.

Meanwhile, even when the NSSF receives another message from the SMF_PGW-C rather than a separate subscription request, the NSSF may regard the message as an implicit subscription request for a slice availability event for one or more S-NSSAIs and create a subscription for the slice availability event for one or more S-NSSAIs for the SMF+PGW-C.

Step 3. One or more PDN Connections managed by the SMF+PGW-C may be created. The PDN Connection creation procedure is the same as steps 1, 2, 5, and 6 of FIG. 2.

Step 4. When an S-NSSAI (e.g., S-NSSAI1) is unavailable and, when there is present an SMF+PGW-C having a subscription for the availability event of the S-NSSAI or an SMF+PGW-C serving a UE using the S-NSSAI (i.e., when the NSSF knows the SMF+PGW-C), the NSSF may transmit a notification message to the SMF+PGW-C. The message includes the following information:
- S-NSSAI: Indicates an unavailable S-NSSAI (or an S-NSSAI requiring replacement). When S-NSSAI availability is present, when the S-NSSAI availability indicates availability, it may indicate an available S-NSSAI.
- S-NSSAI availability: Information indicating whether a slice is usable may be included. It may indicate unavailability or availability (i.e., an S-NSSAI that was unavailable has become available).
- Alternative S-NSSAI: Indicates S-NSSAI information to which an unavailable S-NSSAI should be replaced.
- UE ID, PDU Session ID(s): UE ID(s) or PDU session ID(s) that may no longer use an unavailable S-NSSAI (or may no longer use an S-NSSAI requiring replacement) may be included.
- Number of UEs to be replaced, percentage of UEs to be replaced: A number or percentage (or ratio) of UEs to be replaced may be included instead of a UE ID or PDU Session ID.
- Number of PDU sessions to be replaced or percentage of PDU Sessions to be replaced: A number or percentage (or ratio) of PDU sessions to be replaced may be included instead of a UE ID or PDU Session ID.

Step 5. When an unavailable S-NSSAI (or an S-NSSAI requiring replacement) is included in the message received from the NSSF, the SMF+PGW-C may perform S-NSSAI replacement for some or all of UEs having a PDN Connection for the S-NSSAI.

When the message from the NSSF includes an unavailable S-NSSAI (or an S-NSSAI requiring replacement) and an Alternative S-NSSAI, the Alternative S-NSSAI included in the message from the NSSF may be used as an S-NSSAI replacing the unavailable S-NSSAI (or the S-NSSAI requiring replacement).

When the message from the NSSF includes an unavailable S-NSSAI (or an S-NSSAI requiring replacement) but does not include an Alternative S-NSSAI, the SMF+PGW-C may determine an S-NSSAI (i.e., Alternative S-NSSAI) replacing the unavailable S-NSSAI (or the S-NSSAI requiring replacement) based on configuration information. In this case, a different Alternative S-NSSAI may be used for each PDN Connection.

When the message from the NSSF includes an unavailable S-NSSAI (or an S-NSSAI requiring replacement) and UE IDs (or PDU Session IDs), the SMF+PGW-C may replace the S-NSSAI of the PDN Connections of the UEs (or PDN Connections corresponding to the PDU Session IDs) with the Alternative S-NSSAI.

When the message from the NSSF includes an unavailable S-NSSAI (or an S-NSSAI requiring replacement) and Number of UEs to be replaced (or percentage of UEs to be replaced), the SMF+PGW-C may perform slice replacement for PDU Sessions (or PDN Connections) of a number of UEs satisfying the Number of UEs to be replaced (or percentage of UEs to be replaced) among UEs using the S-NSSAI.

When the message from the NSSF includes an unavailable S-NSSAI (or an S-NSSAI requiring replacement) and Number of PDU sessions to be replaced (or percentage of PDU Sessions to be replaced), the SMF+PGW-C may perform slice replacement for PDN Connections of a number (or percentage or ratio) satisfying the Number of UEs to be replaced (or percentage of UEs to be replaced) among PDU Sessions (or PDN Connections) using the S-NSSAI.

The SMF+PGW-C transmits a message including a PCO (a message format transmitted to the UE) to the MME serving each UE for which slice replacement is to be performed, and may include an Alternative S-NSSAI and PDU Session ID (or PDN Connection ID), and Mapping of Alternative S-NSSAI in the PCO.

The Mapping of Alternative S-NSSAI indicates mapping information between the existing S-NSSAI and the Alternative S-NSSAI (i.e., information indicating that the Alternative S-NSSAI is used instead of the existing S-NSSAI).

Step 6. When a PCO is present in the message received from the SMF+PGW-C, the MME transmits the PCO to the UE through the RAN.

Step 7. When a PCO is included in the message received through the RAN and the Alternative S-NSSAI and PDU Session ID are included in the PCO, the UE changes the S-NSSAI corresponding to the PDU Session ID to the S-NSSAI value included in the Alternative S-NSSAI.

Step 8. The SMF+PGW-C may transmit a message indicating a result of network slice replacement to the NSSF. The message may include a Transaction ID, a network slice replacement execution result per UE ID or PDU session ID (e.g., success when processing is possible, failure when processing is not possible), and an Alternative S-NSSAI per UE or PDU session ID (may be included if the SMF+PGW-C has determined the Alternative S-NSSAI).

When network slice replacement is not possible for the PDN Connection (e.g., when the SMF+PGW-C has identified that the maximum number of sessions has been reached for the Alternative S-NSSAI determined by the PCF), the SMF+PGW-C may transmit a network slice replacement execution result indicating failure and cause information (e.g., maximum number of sessions reached).

Based on the processing result included in the message received from the SMF+PGW-C, the NSSF may determine whether to retry slice change to another Alternative S-NSSAI for UEs (or PDN Connections) still using an unavailable slice in the EPS. When so, the NSSF may perform network slice replacement by including another Alternative S-NSSAI in the message of step 4.

Step 9. When the UE has moved to a 5GS, and the message received in step 9 includes Mapping of Alternative S-NSSAI and the information indicates that an Alternative S-NSSAI is to be used instead of an S-NSSAI, the UE may include the Alternative S-NSSAI instead of the S-NSSAI in a PDU session establishment request message transmitted to the AMF.

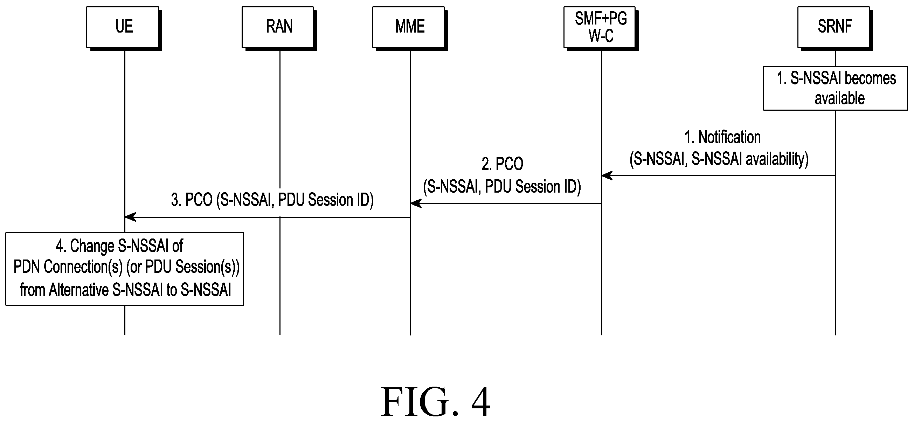

FIG. 4 illustrates a flowchart of a process for managing a network slice according to an embodiment of the disclosure. More specifically, FIG. 4 illustrates a method for using a slice again when a slice that was replaced due to unavailability has become available again.

Step 1. When an S-NSSAI (e.g., S-NSSAI1) is unavailable and, when there is present an SMF+PGW-C having a subscription for the availability event of the S-NSSAI or an SMF+PGW-C serving a UE using the S-NSSAI (i.e., when the SRNF knows the SMF+PGW-C), a slice replacement notification function (SRNF) may transmit a notification message to the SMF+PGW-C. Here, the SRNF may be located in one or more of the PCF, UDM, OAM, and NSSF.

The message includes the following information:
- S-NSSAI: Indicates an S-NSSAI whose availability has changed.
- S-NSSAI availability: Indicates availability or unavailability.
- UE ID, PDU Session ID(s): UE ID(s) or PDU session ID(s) to be notified of an S-NSSAI availability change (or for which slice replacement is to be performed due to an S-NSSAI availability change) may be included.

Step 2. When the message received from the SRNF includes an S-NSSAI that has become available (i.e., when the S-NSSAI availability indicates availability), the SMF+PGW-C may perform S-NSSAI replacement to the S-NSSAI that has become available again for some or all of PDN Connections for which slice replacement has been performed and whose original S-NSSAI is the S-NSSAI that has become available. When the message received in step 1 includes a UE ID or PDU Session ID, S-NSSAI replacement (i.e., replacement for using the originally used S-NSSAI) may be performed for the corresponding UE ID(s) or PDU Session(s).

When the message received from the SRNF includes an S-NSSAI that has become available (i.e., when the S-NSSAI availability indicates availability), the SMF+PGW-C transmits a message including a PCO (a message format transmitted to the UE) to the MME serving each UE for which slice replacement is to be performed, and may include the S-NSSAI included in the message received from the SRNF and PDU Session ID (or PDN Connection ID) in the PCO.

Step 3. When a PCO is present in the message received from the SMF+PGW-C, the MME transmits the PCO to the UE through the RAN.

Step 4. When a PCO is included in the message received through the RAN and the S-NSSAI and PDU Session ID are included in the PCO, the UE changes the S-NSSAI corresponding to the PDU Session ID to the S-NSSAI value corresponding to the S-NSSAI included in the received message.

When a stored Mapping of Alternative S-NSSAI is present and, when Mapping of Alternative S-NSSAI and/or Alternative S-NSSAI are not present in the PCO, the UE may delete the stored Mapping of Alternative S-NSSAI.

The Mapping of Alternative S-NSSAI indicates mapping information between the existing S-NSSAI and the Alternative S-NSSAI (i.e., information indicating that the Alternative S-NSSAI is used instead of the existing S-NSSAI).

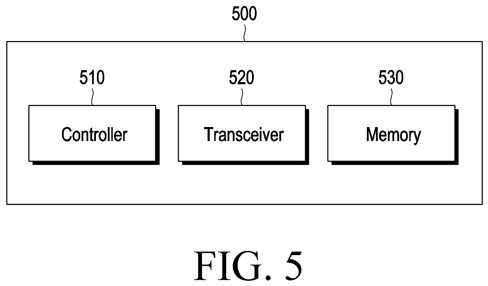

FIG. 5 illustrates a block diagram illustrating a device for an entity according to embodiments of the disclosure.

An device 500 may implement one of a plurality of entities described herein. For example, the device may implement any one of a UE 500, SMF+PGW-C, MME, PCF, NSSF, and SRNF, but the disclosure is not limited thereto.

The device 500 may include memory 530, a transceiver 520, and a controller 510.

The controller 510 may control operations of other elements of the device 500. The operations of the device 500 may be understood to be substantially executed by the controller 510. The controller 510 may be implemented through at least one processor. The controller may execute instructions stored in the memory 530 to perform operations of the device 500 described herein.

The transceiver 520 may be used to transmit signals from the controller 510 to other entities or to receive signals from other entities. The transceiver 520 may support communication through various radio access technologies (RATs) including, e.g., Long Term Evolution (LTE), Wireless Fidelity (Wi-Fi), orthogonal frequency division multiplexing (OFDM), code division multiple access (CDMA), and Bluetooth. The RATs supported by the transceiver 520 are not limited thereto.

The memory 530 may store at least one of information transmitted and/or received through the transceiver 520 and information generated through the controller 510. The memory 530 may additionally store information/data/commands/instructions to be executed by the controller 510 to cause the device 500 to perform the operations described herein. The memory 530 may include a non-transitory computer-readable storage medium storing instructions executable by the controller.

The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for managing a network slice by a network entity, the method comprising:
receiving a request message for a packet data network (PDN) connection related to a user equipment (UE) from a mobility management entity (MME);
determining single-network slice selection assistance information (S-NSSAI) for the PDN connection;
in case that the request message for the PDN connection includes information indicating that the UE supports network slice replacement, transmitting a subscription request for network slice availability information to a policy control function (PCF); and
transmitting a message including the determined S-NSSAI for the PDN connection to the MME.

2. The method of claim 1, further comprising:
receiving a notification of unavailability of the S-NSSAI from the PCF;
based on receiving the notification of unavailability of the S-NSSAI, replacing the S-NSSAI with another S-NSSAI for the PDN connection; and
transmitting a message related to the replacement of the S-NSSAI to the MME.

3. The method of claim 2, wherein the notification of unavailability of the S-NSSAI includes at least one of information indicating the unavailable S-NSSAI, information indicating the other S-NSSAI for replacing the S-NSSAI, and a transaction ID related to a protocol data unit (PDU) session related to the PDN connection.

4. The method of claim 3, further comprising, in case that the notification of unavailability of the S-NSSAI does not include information indicating the other S-NSSAI for replacing the S-NSSAI, determining the other S-NSSAI for replacing the S-NSSAI based on configuration information and subscription slice information for the UE.

5. The method of claim 2, wherein the message related to the replacement of the S-NSSAI includes a transaction ID related to a protocol data unit (PDU) session related to the PDN connection and information indicating the other S-NSSAI, and mapping information between the other S-NSSAI and the S-NSSAI.

6. The method of claim 1, comprising transmitting a subscription request for slice availability to a network slice selection function (NSSF), wherein the subscription request for the slice availability includes at least one of an event ID indicating the slice availability, information indicating at least one S-NSSAI supported by the network entity, and a notification address.

7. The method of claim 6, further comprising:
receiving a notification of an unavailable S-NSSAI from the NSSF;
based on receiving the notification of the unavailable S-NSSAI, performing replacement of S-NSSAI for at least one UE having a PDU connection for the unavailable S-NSSAI; and
transmitting a message related to the replacement of the S-NSSAI to an MME related to each of the at least one UE.

8. The method of claim 7, wherein the notification of the unavailable S-NSSAI includes at least one of information indicating the unavailable S-NSSAI, information indicating another S-NSSAI for replacing the unavailable S-NSSAI, an ID of at least one UE or at least one PDU session ID unable to use the unavailable S-NSSAI, a number or ratio of UEs for which S-NSSAI is to be replaced, and a number or ratio of PUD sessions for which S-NSSAI is to be replaced.

9. The method of claim 7, comprising, in case that the notification of the unavailable S-NSSAI does not include information indicating another S-NSSAI for replacing the unavailable S-NSSAI, determining another S-NSSAI for replacing the unavailable S-NSSAI on a per PDU session basis based on configuration information.

10. The method of claim 7, wherein the message related to the replacement of the S-NSSAI includes information indicating another S-NSSAI replacing the S-NSSAI for a UE corresponding to the MME, and mapping information between the other S-NSSAI and the S-NSSAI.

11. The method of claim 1, further comprising:
receiving a message for a change in availability of S-NSSAI from a slice replacement notification function (SRNF);
in case that the message regarding the change in availability of the S-NSSAI indicates an S-NSSAI that has become available, replacing S-NSSAI for at least a portion of PDN connection using the S-NSSAI that has become available with the S-NSSAI that has become available; and
transmitting a message for the replacement of the S-NSSAI to an MME associated with the replaced S-NSSAI.

12. The method of claim 11, wherein the message for the change in availability of the S-NSSAI includes at least one of information indicating an S-NSSAI whose availability has changed, information indicating availability or unavailability of the S-NSSAI whose availability has changed, at least one UE ID associated with the S-NSSAI whose availability has changed, and at least one PDU session ID associated with the S-NSSAI whose availability has changed.

13. The method of claim 12, wherein replacing the S-NSSAI for the at least a portion of the PDN connection using the S-NSSAI that has become available with the S-NSSAI that has become available includes:
in case that the message for the change in availability of the S-NSSAI includes the information indicating the at least one UE ID associated with the S-NSSAI whose availability has changed, replacing S-NSSAI for the at least one UE ID with the S-NSSAI that has become available; or
in case that the message for the change in availability of the S-NSSAI includes the information indicating the at least one PDU session ID associated with the S-NSSAI whose availability has changed, replacing S-NSSAI for the at least one PDU session ID with the S-NSSAI that has become available.

14. The method of claim 11, wherein the message for the replacement of the S-NSSAI includes information indicating the replaced S-NSSAI that has become available and information indicating at least one PDU session ID.

15. A device for a network entity for managing a network slice, comprising:
a transceiver; and
a controller connected to the transceiver, wherein the controller is configured to operate according to the method of any one of claims 1 to 14.
